# EUROPÄISCHE PATENTANMELDUNG

(11) **EP 4 484 904 A1**
(43) Veröffentlichungstag der Anmeldung: **01.01.2025**
(21) Anmeldenummer: 23182603.3
(22) Anmeldetag: 30.06.2023
(51) Int. Cl.: G01F 23/284, G01S 7/03, G01S 13/88

(54) **RADARMESSGERÄT ZUR ERFASSUNG VON FÜLLSTÄNDEN UND/ODER ABSTÄNDEN**

(71) Anmelder: VEGA Grieshaber KG, 77709 Wolfach (DE)
(72) Erfinder: WEINZIERLE, Christian, 77709 Wolfach (DE); WÄLDE, Steffen, 78078 Niedereschach (DE)
(74) Vertreter: Maiwald GmbH

(57) **Zusammenfassung**

Radarmessgerät zur Erfassung von Füllständen und/oder Abständen, umfassend: einen Primärstrahler zum Senden und Empfangen von Radarsignalen; eine Antenneneinheit zum Senden und Empfangen von Radarsignalen; eine Filtereinheit zum Filtern der Radarsignale, wobei die Filtereinheit zwischen Primärstrahler und Antenneneinheit angeordnet ist.

## Beschreibung

### Gebiet der Erfindung

Die vorliegende Erfindung betrifft ein Radarmessgerät zur Erfassung von Füllständen und/oder Abständen sowie ein System zur Erfassung von Füllständen und/oder Abständen.

### Hintergrund

Radarmessgeräte sind im Stand der Technik grundsätzlich bekannt und finden beispielsweise Anwendung in der Prozess-und Chemieindustrie zur Überwachung von Füllständen in Behältern.

In diesem Zusammenhang hat sich nunmehr herausgestellt, dass ein weiterer Bedarf besteht, ein Radarmessgerät zur Erfassung von Füllständen und/oder Abständen bereitzustellen, insbesondere besteht ein Bedarf ein genaues und effizientes Radarmessgerät zur Erfassung von Füllständen und/oder Abständen bereitzustellen.

Diese und andere Aufgaben, die beim Lesen der folgenden Beschreibung noch genannt werden oder vom Fachmann erkannt werden können, werden durch den Gegenstand unabhängigen Ansprüche gelöst. Die abhängigen Ansprüche bilden den zentralen Gedanken der vorliegenden Erfindung in besonders vorteilhafter Weise weiter.

### Zusammenfassung der Erfindung

Gemäß einem ersten Aspekt der vorliegenden Erfindung wird ein Radarmessgerät zur Erfassung von Füllständen und/oder Abständen bereitgestellt, umfassend:
einen Primärstrahler zum Senden und Empfangen von Radarsignalen;
eine Antenneneinheit zum Senden und Empfangen von Radarsignalen;
eine Filtereinheit zum Filtern der Radarsignale, wobei die Filtereinheit zwischen Primärstrahler und Antenneneinheit angeordnet ist.

Der Begriff Primärstrahler ist vorliegend breit zu verstehen und meint ein strukturelles Element, das eingerichtet elektromagnetische Wellen, vorzugsweise Radarsignale, die von einer Schaltung, vorzugsweise einer Hochfrequenzschaltung im GHz Bereich, erzeugt werden, abzustrahlen und/oder reflektierte Radarsignale zu empfangen. Der Primärstrahler kann dabei einteilig oder mehrteilig ausgeführt sein. Der Primärstrahler kann zumindest teilweise auf der Hochfrequenzschaltung zur Erzeugung der Radarsignale und zur Verarbeitung reflektierter Radarsignale angeordnet sein.

Der Begriff Radarmessgerät ist vorliegend breit zu verstehen und meint vorzugsweise eine Messeinrichtung zur Erfassung von Füllständen und/oder Abständen, wobei die Messeinrichtung nach dem Prinzip der Laufzeitmessung der Radarsignale die Füllstandshöhe oder den Abstand ermittelt. Die Radarmessgeräte werden zum Beispiel in Behältern zur Erfassung vom Füllstand und/ oder eines Abstands eingesetzt. Hierbei wird unter Berücksichtigung der Position des Radarmessgeräts und der gemessenen Laufzeit zwischen gesendeten Radarsignalen und empfangenen Radarsignalen, d. h. von der Oberfläche z.B. eines Schüttgutes in einem Behälter reflektierten Radarsignalen, ein zu messender Füllstand im Behälter ermittelt. Zur Bestimmung der Laufzeiten können unterschiedliche Verfahren eingesetzt werden, bspw. Pulsradar oder Frequenzmodulations-Dauerstrickradar. Alternativ kann das Radarmessgerät auch als Radarfüllstandsmessgerät bezeichnet werden.

Der Begriff Antenneneinheit ist vorliegend breit zu verstehen und meint ein strukturelles Element, das eingerichtet ist, Radarsignale zu senden und zu empfangen. Die Antenneneinheit kann dabei als Hornantenne ausgeführt sein. Die Antenneneinheit kann dabei als dielektrische Linse ausgeführt sein. Die Antenneneinheit sendet dabei vorzugsweise die Radarsignale auf eine Oberfläche und empfängt die von der Oberfläche reflektierten Radarsignale.

Der Begriff Filtereinheit ist vorliegend breit zu verstehen und meint ein strukturelles passives Element, das eingerichtet ist, Frequenzen eines Signals, vorzugsweise des Radarsignals, unterhalb einer Grenzfrequenz, oberhalb einer Grenzfrequenz oder zwischen zwei Grenzfrequenzen zu filtern. Die Filtereinheit kann dabei einteilig oder mehrteilig ausgeführt sein. Die Filtereinheit weist vorzugsweise eine Hochpasscharakteristik auf. Die Filtereinheit kann eine Tiefpasscharakteristik aufweisen. Die Filtereinheit kann eine Bandpasscharakteristik aufweisen. Die Filtereinheit sperrt dabei vorzugsweise einzelne Moden des von der Hochfrequenzschaltung erzeugten Radarsignals. Die Hochfrequenzschaltung erzeugt beispielsweise zunächst ein Grundsignal (bspw. 40 GHz). Ein Multiplizierer vervielfacht dieses ganzzahlig zur gewünschten Frequenz bzw. zugehörigen Mode (bspw. 240 GHz). Die Filtereinheit filtert nun vorzugweise die Grundmode bei 40 GHz und die entsprechenden Moden höherer Ordnungen bei jeweils 80 GHz, 120 GHz, 160 GHz, 200 GHz, die ebenfalls auftreten, sodass lediglich die gewünschte Mode bei der Frequenz bei 240 GHz den Filter passieren kann. Vorzugsweise filtert die Filtereinheit auch höhere unerwünschte Moden bzw. Frequenzen (z.B. 280 GHz und 320 GHz). Die Filtereinheit kann auch vorteilhafterweise die Polarisation der Radarsignale vorgeben.

Der Erfindung liegt die Erkenntnis zugrunde, dass bei Radarmessgeräten, die oberhalb von 100 GHz betrieben werden, die Radarsignale direkt von der Hochfrequenzschaltung in den Wellenleiter, beispielsweise einen dielektrischen Wellenleiter eingespeist werden. Unterhalb einer Betriebsfrequenz von 100 GHz, wird das Radarsignal hingegen meistens erst über eine Leiterplatte geführt und bevor es in einen Wellenleiter eingespeist wird. Der Übergang von der Leiterplatte (i.e. Trägerplatte) zu dem Wellenleiter wird dabei so ausgelegt, dass sich die gewünschte Mode/Frequenz im Wellenleiter einstellt und ungewünschte Moden/Frequenzen (i.e. Störsignale) herausgefiltert werden. Die vorliegende Erfindung löst diese Aufgabe durch eine Filtereinheit, die im Radarmessgerät integriert ist und somit auch bei Betriebsfrequenzen von oberhalb von 100 GHz, ein Filtern von Störfrequenzen ermöglicht. Dies wirkt sich vorteilhaft auf die Messgüte und Genauigkeit der Füllstandsmessung und/oder Abstandsmessung aus.

Moderne Radarmessgeräte für die Prozessindustrie und die Automatisierungstechnik erschließen mittlerweile nach und nach den Frequenzbereich oberhalb 100 GHz. Aufgrund der Entstehung neuer frequenzrechtlicher Regulierungen, immer besserer Halbleiterprozesse und genauerer Fertigungsverfahren können radarbasierte Füllstandmessgeräte bis 250 GHz entwickelt, produziert und vermarktet werden. Vorteile haben höhere Frequenzbereiche dahingehend, dass bei gleicher Antennengröße ein schmalerer Öffnungswinkel realisierbar ist. Häufig erzeugen die in Behältern eingebaute Rührwerke oder Heizwendeln Störreflektionen im Radarsignal, die jedoch mit kleinerem Öffnungswinkel der Antenne geringer werden oder sogar verschwinden.

Ebenfalls ist aus regulatorischer Sicht in höheren Frequenzbereichen eine größere Signalbandbreite zulässig, wodurch eine bessere Trennschärfe zweier benachbarter Radarziele erreichbar ist. Hier kommen auf die Entwickler der Radarmesstechnik im Vergleich zur heute etablierten 80 GHz-Technologie neue Herausforderungen zu.

Ein Beispiel sind Hohlleiter die bei 80 GHz-Sensoren vorwiegend verwendet werden, um das Radarsignal vom Radarmodul an die Antenne zu übertragen. Die Hohlleiter, die in diesem Fall vorwiegend als Rundhohlleiter ausgeführt sind, haben in diesem Frequenzbereich einen Durchmesser zwischen 2,5 und 3,0 mm und können vergleichsweise günstig über Tieflochbohrverfahren in einer ausreichenden Länge hergestellt werden. Die Länge des Hohlleiters ist hinsichtlich der Temperaturentkopplung zwischen dem zu überwachenden Prozess und der Sensorelektronik elementar wichtig. Die Sensorelektronik darf eine Temperatur von 85°C nicht übersteigen wohingegen die Prozesstemperatur bis zu 450°C betragen kann. Über lange Hohlleiter kann eine Temperaturentkopplung durchgeführt werden.

Bei größer werdenden Frequenzen werden die Hohlleiterdurchmesser zunehmend kleiner, da die Cutoff-Frequenz der Grundmode vom Hohlleiterdurchmesser abhängt. Bei einem 250 GHz Radarsignal beträgt der Hohlleiterdurchmesser nur noch 0,87 mm. Bei einem solch kleinen Durchmesser wird es erheblich aufwändiger einen gleich langen Hohlleiter zu fertigen als beim Hohlleiterdurchmesser bei 80 GHz. Rechteckige Hohlleiter sind bei Radarfüllstandmessgeräten eher untypisch, da diese in der Herstellung aufwändiger sind. Die Cutoff-Frequenz bezeichnet die Frequenz ab der die Grundmode des Hohlleiters ausbreitungsfähig ist. Liegt die Signalfrequenz unterhalb der Cutoff-Frequenz findet keine Signalübertragung statt, da die elektromagnetische Welle nicht ausbreitungsfähig ist. Die Welle wird in diesem Fall am Eingang des Hohlleiters reflektiert. Ein Hohlleiter zeigt somit ein Hochpassverhalten.

Moden höherer Ordnung als die Grundmode besitzen ebenfalls Cutoff-Frequenzen, die allerdings oberhalb der Cutoff-Frequenz der Grundmode liegen. Für Radarfüllstandmessgeräte ist es stets von Vorteil den Hohlleiter so zu betreiben, dass er in der Grundmode betrieben wird. Moden höherer Ordnung besitzen im Hohlleiter andere Ausbreitungsgeschwindigkeiten als die Grundmode, was zu fehlerhaften Messungen führen kann.

Weiterhin besteht beim rechteckigen Hohlleiter im Vergleich zum runden Hohlleiter der Unterschied, dass die Polarisation der elektromagnetischen Welle im Rechteckhohlleiter vorgegeben ist. Der elektrische Feldvektor steht dabei parallel zur kurzen Kante des Hohlleiters. Im Rundhohlleiter hingegen ist die Polarisation beliebig und wird abhängig davon vorgegeben wie die Welle in den Hohlleiter eingekoppelt wird. Je nach Art der Anwendung kann dies Vor- und Nachteile haben.

Ein weiterer Punkt, den es bei Hohlleitern zu beachten gibt, ist die Oberflächenrauheit im inneren der Bohrung. Die Oberflächenrauheit hat bei größer werdenden Frequenzen einen zunehmenden Einfluss auf die Signaldämpfung die das Radarsignal erfährt, wenn es durch den Hohlleiter geführt wird. Bei gleicher Oberflächenrauheit kann die Dämpfung bei einem Hohlleiter bei 80 GHz beispielsweise 0,1 dB/cm und bei 250 GHz 1 dB/cm betragen. Aus diesen Gründen werden die Hohlleiter bei höheren Frequenzen vorzugweise zunehmend durch dielektrische Wellenleiter ersetzt. Der dielektrische Wellenleiter besteht aus einem Kunststoff, der vorwiegend eine niedrige relative Permittivität εr und einen niedrigen Verlustfaktor tan(δ) aufweist. Beispiele hierfür sind HDPE, PVDF, FEP und PFA. Der Querschnitt kann verschiedene Geometrien aufweisen, wobei eine runde und eine rechteckige Geometrie am weitesten verbreitet sind. Neben den Vorteilen wie eine geringe Signaldämpfung hat der dielektrische Wellenleiter auch Nachteile.

Beim dielektrischen Wellenleiter läuft ein Teil des elektromagnetischen Feldes innerhalb und ein anderer Teil des Feldes außerhalb des Wellenleiters. Dies macht den dielektrischen Wellenleiter anfällig für Störechos, die sich in der Nähe des Wellenleiters befinden. Die Verteilung wie viel Feldanteile sich im inneren und wie viel Feldanteile sich im äußeren Bereich des Wellenleiters befinden, hängt von der Geometrie des Wellenleiters, der Frequenz des Radarsignals und vom verwendeten Kunststoff ab. Eine Cutoff-Frequenz im Sinne eines Hohlleiters weist der dielektrische Wellenleiter nicht auf.

Ebenso weist der rechteckige dielektrische Wellenleiter im Vergleich zum rechteckigen Hohlleiter keine polarisationsfilternden Eigenschaften auf. Je nachdem wie das Feld eingekoppelt wird, wird dieses so übertragen.

Ein weiterer grundlegender Unterschied zwischen Sensoren unterhalb 100 GHz und oberhalb 100 GHz besteht darin, dass das erzeugte Radarsignal oberhalb 100 GHz direkt von den signalerzeugenden Halbleitern in den Wellenleiter eingespeist wird. Bei Radargeräten unterhalb 100 GHz, wird das Radarsignal oft erst über eine Leiterplatte, die mindestens eine Lage aus Hochfrequenzleiterplattenmaterial aufweist, geführt, bevor das Signal in einen Hohlleiter oder einen Koaxialleiter eingespeist wird. In diesem Fall wird der Übergang von Leiterplatte in Hohlleiter oder Koaxialleiter so ausgelegt, dass sich die gewünschte Mode im Wellenleiter einstellt und alle störenden Signalfrequenzen, die vom Hochfrequenzmodul erzeugt werden, herausgefiltert werden.

Beispielsweise werden in den Hochfrequenzmodulen häufig Multiplizierer verwendet, die eine Grundschwingung auf eine höhere Frequenz um einen ganzzahligen Faktor vervielfachen. Wird beispielsweise ein Signal bei 240 GHz benötigt, erzeugt die Schaltung 302 im Hochfrequenzmodul zunächst eine Grundschwingung bei beispielsweise 60 GHz, die dann um den Faktor vier multipliziert wird. Eine solche Schaltung ist vergleichsweise einfach herzustellen. Nachteilig daran ist, dass sich neben der sich einstellenden gewünschten 240 GHz Schwingung ebenfalls Signale um 60 GHz und deren ganzzahlige Vielfache, also 120 GHz, 180 GHz, 300 GHz... einstellen. Diese Störsignale gilt es zu unterdrücken um bestehende und kommende Funkstandards einzuhalten. Ein weiteres Beispiel ist bei 80 GHz Sensoren. Hier wird beispielsweise die Grundwelle bei 40 GHz erzeugt. Das erzeugte Signal wird über Bonddrähte 204 vom Halbleiter auf eine Leiterplatte heruntergeführt und zu einem Übergang von Leiterplatte auf Hohlleiter geleitet. Der Übergang und der nachfolgende Hohlleiter filtern die Grundwelle von 40 GHz weg, sodass diese Schwingung nicht mehr abgestrahlt wird.

Radarfüllstandmessgeräte, die Frequenzen oberhalb 100 GHz verwenden, koppeln das Signal häufig direkt und ohne zusätzlichem Trägersubstrat in einen dielektrischen Wellenleiter ein. Hierfür befindet sich auf dem Halbleitermaterial auf dem sich die Hochfrequenzschaltung befindet gleichzeitig auch ein Strahlerelement, das in Kombination mit einer Anordnung aus Koppelelement und Resonatorelement einen Primärstrahler bilden kann. Mit einem solchen Primärstrahler kann entweder in einen dielektrischen Wellenleiter eingekoppelt oder eine dielektrische Linse ausgeleuchtet werden. Das Halbleitermaterial wird häufig auf eine Trägerleiterplatte mittels einer Klebeschicht aufgeklebt.

Der Vorteil liegt darin, dass das Signal so eine möglichst geringe Signaldämpfung erfährt, wenn es nicht mehr über eine Leiterplatte bis zum Übergang in den Hohlleiter/dielektrischen Wellenleiter geführt werden muss. Bei der Kombination dieser direkten Einkopplung und einem dielektrischen Wellenleiter, findet jedoch keine implizite Filterwirkung durch Hohlleiterübergang bzw. Hohlleiter statt.

In einer bevorzugten Ausführungsform umfasst die Filtereinheit einen Hohlleiter. Der Hohlleiter kann dabei aus Metall sein. Der Hohlleiter kann dabei ein Rundhohlleiter sein. Der Hohlleiter kann dabei ein Rechteckhohlleiter sein. Der Hohlleiter kann dabei aus mit Metall beschichteten Kunststoff bestehen. In Abhängigkeit der Kontur des Hohlleiters, Abmessungen des Rechtecks oder Bohrungsdurchmesser (i.e. Hohlleiterdurchmesser), wird vorteilhafterweise die Filtercharakteristik eingestellt.

In einer bevorzugten Ausführungsform umfasst die Filtereinheit einen Rundhohlleiter. Die Rundhohleiter weisen einen Hohlleiterdurchmesser (i.e. Durchgangsbohrung) auf. Bei größer werdenden Frequenzen werden die Hohlleiterdurchmesser zunehmend kleiner, da die Cutoff-Frequenz der Grundmode vom Hohlleiterdurchmesser abhängt. Die Cutoff-Frequenz bezeichnet die Frequenz ab der die Grundmode des Hohlleiters ausbreitungsfähig ist. Liegt die Signalfrequenz unterhalb der Cutoff-Frequenz findet keine Signalübertragung statt, da die elektromagnetische Welle nicht ausbreitungsfähig ist. Die Welle wird in diesem Fall am Eingang des Hohlleiters reflektiert. Ein Hohlleiter zeigt somit ein Hochpassverhalten. Ein Rundhohlleiter kann vorteilhafterweise unerwünschte Moden herausfiltern.

In einer bevorzugten Ausführungsform umfasst die Filtereinheit einen Rechteckhohlleiter. Der Rechteckhohlleiter weist einen rechteckigen Hohlleiterquerschnitt (i.e. durchgängige Tasche) auf. Weiterhin besteht beim Rechteckhohlleiter im Vergleich zum Rundhohlleiter der Unterschied, dass die Polarisation der elektromagnetischen Welle im Rechteckhohlleiter vorgegeben ist. Der elektrische Feldvektor steht dabei parallel zur kurzen Kante des Rechteckhohlleiters. Im Rundhohlleiter hingegen ist die Polarisation beliebig und wird abhängig davon vorgegeben wie die Welle in den Rundhohlleiter eingekoppelt wird. Je nach Art der Anwendung kann dies Vor- und Nachteile haben. Ein Rechteckhohlleiter kann vorteilhafterweise unerwünschte Mode herausfiltern. Ein Rechteckhohlleiter kann vorteilhafterweise eine Polarisationsrichtung vorgeben. Damit kann sichergestellt werden, dass das abgestrahlte Signal genau eine Polarisationsrichtung aufweist. Dadurch kann vorteilhafterweise die Übertragungsqualität gewährleistet werden. Dadurch kann vorteilhafterweise der Einbau des Radarmessgeräts erleichtert werden, da ein Techniker stets weiß, wie das Gerät einzubauen ist.

In einer bevorzugten Ausführungsform umfasst die Filtereinheit zumindest ein Resonatorelement zur Einstellung einer Tiefpasscharakteristik. Das Resonatorelement ist vorzugsweise ein dielektrisches Resonatorelement. Das Resonatorelement bewirkt eine Tiefpassfiltercharakteristik, d.h. lediglich Frequenzen unterhalb einer Grenzfrequenz können die Filtereinheit passieren. In Kombination mit dem Hohlleiter entsteht somit vorteilhafterweise ein Bandpassfilter. Dies kann sich positiv auf die Signalgüte auswirken.

In einer bevorzugten Ausführungsform umfasst die Filtereinheit zumindest eine Blende zur Einstellung einer Tiefpasscharakteristik. Die Blende bewirkt eine Tiefpassfiltercharakteristik, d.h. lediglich Frequenzen unterhalb einer Grenzfrequenz können die Filtereinheit passieren. In Kombination mit dem Hohlleiter entsteht somit vorteilhafterweise ein Bandpassfilter. Dies kann sich positiv auf die Signalgüte auswirken.

In einer bevorzugten Ausführungsform umfasst die Antenneneinheit eine dielektrische Linse. Der Begriff dielektrische Linse ist vorliegend breit zu verstehen und meint vorzugsweise eine beidseitig gewölbte Linse aus einem dielektrischen Material, die mittelbar oder unmittelbar vom Primärstrahler emittierte Radarsignale empfängt und diese gerichtet weitersendet oder reflektierte Radarsignale empfängt und diese unmittelbar oder mittelbar an den Primärstrahler gerichtet sendet. Die dielektrische Linse kann dabei die Form bzw. Richtung der Radarsignale beeinflussen. Die dielektrische Linse weist vorzugsweise eine kugelförmige Form auf. In Abhängigkeit eines Radius oder einer Wölbung ergibt sich ein Abstand in dem die von der dielektrischen Linse ausgesendete bzw. emittierte Strahlung (i.e. Radarsignale) gebündelt wird. Die dielektrische Linse umfasst vorzugsweise ein verlustfreies dielektrisches Material.

In einer bevorzugten Ausführungsform umfasst die Antenneneinheit eine Hornantenne. Der Begriff Hornantenne ist vorliegend breit zu verstehen und meint eine trichterförmige Antenne zum Senden und Empfangen von Radarsignalen, die von einem Hohlleiter gespeist wird.

In einer bevorzugten Ausführungsform umfasst das Radarmessgerät weiter zumindest ein dielektrisches Wellenleiterelement zum Führen der Radarsignale. Der dielektrische Wellenleiter kann dabei aus Kunststoff sein. Beispiele hierfür sind HDPE, PVDF, FEP und PFA. Der dielektrische Wellenleiter kann dabei beliebige Geometrien als Querschnitt aufweisen. Vorzugsweise weist der dielektrische Wellenleiter einen runden Querschnitt oder einen rechteckigen Querschnitt auf. Der Kunststoff weist vorzugsweise eine niedrigere relative Permittivität und einen niedrigen Verlustfaktor auf. Dies wirkt sich insgesamt positiv auf die Signaldämpfung (i.e. geringe unerwünschte Signaldämpfung) zwischen Primärstrahler und Antenne aus. Ebenso entsteht dadurch eine galvanische Trennung von Prozess und Sensorelektronik. Das dielektrische Wellenleiterelement eignet sich vorteilhaft zum Führen hochfrequenter Radarsignale, da es eine geringe Dämpfung im Vergleich zu Hohlleitern auf diese bewirkt.

In einer bevorzugten Ausführungsform ist das dielektrische Wellenleiterelement zwischen dem Primärstrahler und der Filtereinheit angeordnet. Die Radarsignale zwischen Primärstrahler und Filtereinheit werden vorteilhafterweise über das dielektrische Wellenleiterelement in beide Richtungen geführt.

In einer bevorzugten Ausführungsform ist das dielektrische Wellenleiterelement zwischen der Filtereinheit und der Antennenvorrichtung angeordnet. Die Radarsignale zwischen Filtereinheit und Antennenvorrichtung werden vorteilhafterweise über das dielektrische Wellenleiterelement in beide Richtungen geführt.

In einer bevorzugten Ausführungsform ist das Radarmessgerät eingerichtet bei einer Frequenz oberhalb von 100 GHz zu messen.

Ein weiterer Aspekt der vorliegenden Erfindung umfasst ein System zur Erfassung von Füllständen und/oder Abständen, umfassend zumindest ein oben näher beschriebenes Radarmessgerät sowie einen Behälter zur Speicherung eines Materials.

In einer bevorzugten Ausführungsform umfasst der Behälter ein Rührwerk.

In einer bevorzugten Ausführungsform umfasst der Behälter eine Heizwendel.

### Beschreibung der bevorzugten Ausführungsformen

Nachfolgend wird eine detaillierte Beschreibung der Figuren gegeben, darin zeigt
- **Figur 1**: eine schematische Ansicht eines erfindungsgemäßen Systems zum Erfassen von Füllständen;
- **Figur 2**: einen schematischen Ausschnitt eines erfindungsgemäßen Radarmessgeräts;
- **Figur 3**: einen schematischen Ausschnitt eines erfindungsgemäßen Radarmessgeräts;
- **Figur 4**: einen schematischen Ausschnitt eines erfindungsgemäßen Radarmessgeräts;
- **Figur 5**: einen schematischen Ausschnitt eines erfindungsgemäßen Radarmessgeräts;
- **Figur 6**: einen schematischen Ausschnitt eines erfindungsgemäßen Radarmessgeräts;
- **Figur 7**: einen schematischen Ausschnitt eines erfindungsgemäßen Radarmessgeräts;
- **Figur 8**: einen schematischen Ausschnitt eines erfindungsgemäßen Radarmessgeräts; und
- **Figur 9**: zwei Rechteckshohlleiter mit Resonatorelementen und Blenden.

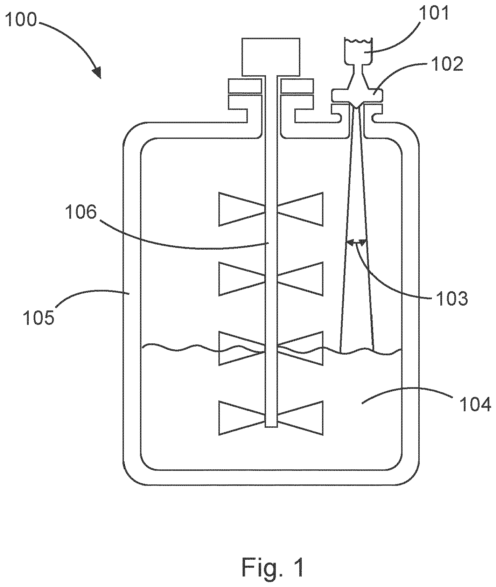

Figur 1 zeigt eine schematische Ansicht eines erfindungsgemäßen Systems 100 zum Erfassen von Füllständen. Das System 100 umfasst ein unten näher beschriebenes Radarmessgerät 101. Das Radarmessgerät 101 weist im unteren Bereich eine Antenne 102 zum Aussenden und Empfangen von Radarsignalen auf. In Abhängigkeit der Messfrequenz stellt sich ein Öffnungswinkel 103 der ausgesandten Radarsignale ein. Das System umfasst weiterhin einen Behälter 105 zur Speicherung eines Materials 104, beispielsweise eine Flüssigkeit. Der Behälter umfasst weiterhin ein Rührwerk 106. Aus der Zeichnung geht hervor, dass der Strahlungskegel, der sich durch den Öffnungswinkel 103 ergibt, nicht mit dem Rührwerk überlappt. Dies wirkt sich vorteilhaft auf die Messgenauigkeit aus, da so keine Störreflexionen auftreten. Weiterhin kann das System 100 auch eine Heizwendel (nicht dargestellt) umfassen.

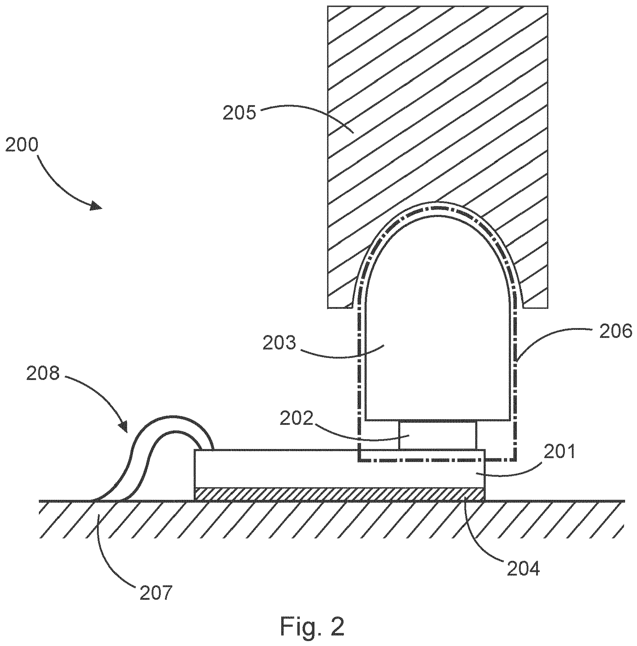

Figur 2 zeigt einen schematischen Ausschnitt eines erfindungsgemäßen Radarmessgeräts 200. Das Radarmessgerät umfasst zumindest eine Trägerplatte (i.e. Leiterplatte) 207. Auf der Trägerplatte 207 ist über eine Klebeschicht 204 ein Halbleitermaterial 201 angebracht. Auf dem Halbleitermaterial befindet sich eine Hochfrequenzschaltung (nicht gezeigt) und ein Strahlerelement (nicht gezeigt). Oberhalb des Strahlerelements befindet sich ein Resonatorelement 202. Oberhalb des Resonatorelements 202 ist ein Koppelelement 203 z.B. aus PEEK angeordnet. Das Koppelelement 203, das Resonatorelement 202 und das Strahlerelement bilden vorliegend den Primärstrahler 206. Das Halbleitermaterial 201 ist vorliegend über Bonddrähte 208 mit der Trägerplatte 207 elektrisch verbunden. Oberhalb des Primärstrahlers 206 ist ein dielektrische Wellenleiter 205 angeordnet. Der Primärstrahler 206 sendet die durch die Frequenzschaltung erzeugten Radarsignale an den dielektrischen Wellenleiter 205 bzw. empfängt die vom dielektrischen Wellenleiter 205 geführten und von der Oberfläche des Materials reflektierten Radarsignale.

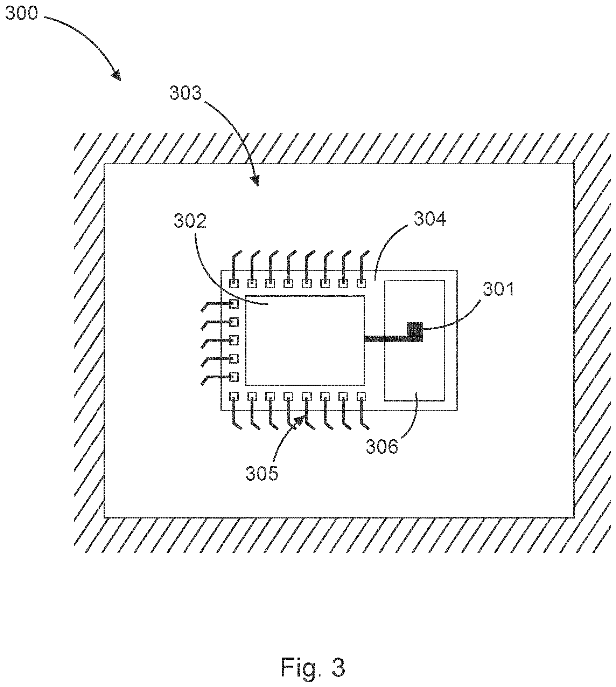

Figur 3 zeigt einen schematischen Ausschnitt eines erfindungsgemäßen Radarmessgeräts 300 in der Draufsicht. Das Halbleitermaterial 304 ist auf der Trägerplatte 303 angeordnet und über die Bonddrähte 305 elektrisch mit der Trägerplatte 303 verbunden. Auf dem Halbleitermaterial 304 ist die Hochfrequenzschaltung 302 sowie das Strahlerelement 301 angeordnet. Oberhalb des Strahlerelements 301 ist das Resonatorelement 306 angeordnet. Die in der Hochfrequenzschaltungen 302 erzeugten Radarsignale werden an das Strahlerelement 301 weitergeleitet, um von dort aus durch das Resonatorelement 306 verstärkt zu werden. Die von der Oberfläche des Materials reflektierten Radarsignale und vom Radarmessgerät empfangenen Radarsignale durchlaufen den gleichen Weg nur in entgegengesetzter Richtung.

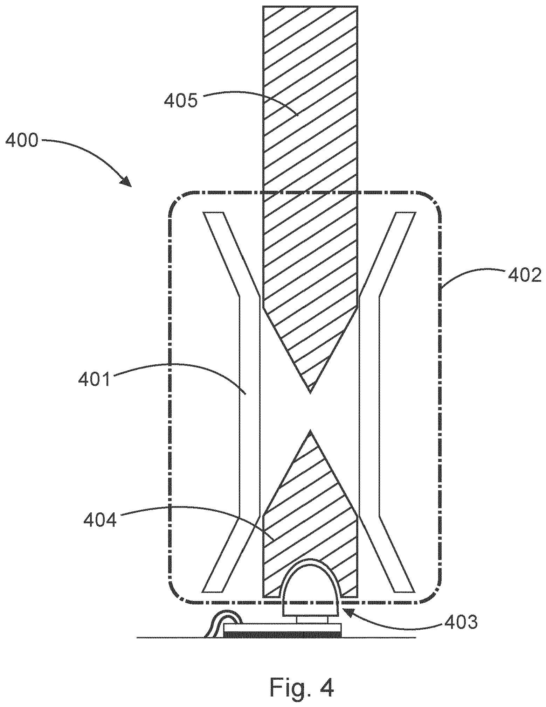

Figur 4 zeigt einen schematischen Ausschnitt eines erfindungsgemäßen Radarmessgeräts 400 zur Erfassung von Zuständen in Behältern. Das Radarmessgerät 400 umfasst einen Primärstrahler 403 zum Senden und Empfangen von Radarsignalen. Der Primärstrahler 403 entspricht vorliegend dem in Figur 2 beschriebenen Primärstrahler. Das Radarmessgerät 400 weist vorliegend weiterhin einen zweigeteilten dielektrischen Wellenleiter 404 und 405 auf. Das Radarsignal koppelt vom Primärstrahler 403 zunächst in den dielektrischen Wellenleiter 404 ein. Zwischen dem dielektrischen Wellenleiter 404 und dem dielektrischen Wellenleiter 405 ist eine Filtereinheit 402 zum Filtern der Radarsignale angeordnet. Die Filtereinheit ist vorliegend als metallischer Rundhohlleiter 401 ausgeführt. Die Radarsignale koppeln vom metallischen Hohlleiter 401 in den dielektrischen Wellenleiter 405 ein. Vom dielektrischen Wellenleiter 405 werden die Radarsignale an die Antenneneinheit (nicht dargestellt) zum Senden und Empfangen weitergeleitet. Die Filtereinheit 402, die als metallischer Hohlleiter 401 ausgeführt ist, filtert vorliegend das Radarsignal hinsichtlich Mode und Frequenz.

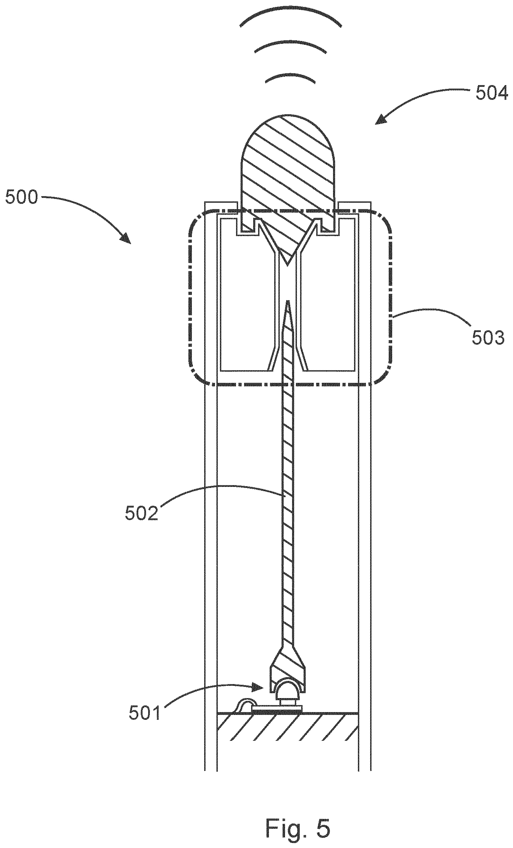

Figur 5 zeigt einen schematischen Ausschnitt eines erfindungsgemäßen Radarmessgeräts 500. Das Radarmessgerät 500 umfasst vorliegend einen Primärstrahler 501, einen dielektrischen Wellenleiter 502, eine Filtereinheit 503 und eine Antenneneinheit 504. Die Filtereinheit 503 ist als metallischer Hohlleiter ausgeführt. Die Antenneneinheit 504 ist vorliegend als Linsenantenne ausgeführt. Die Filtereinheit 503 ist zwischen dem dielektrischen Wellenleiter 502 und der Antenneneinheit 504 angeordnet.

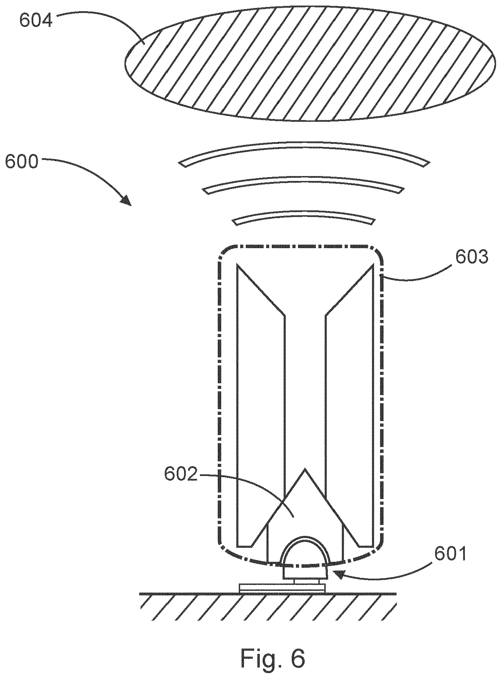

Figur 6 zeigt einen schematischen Ausschnitt eines erfindungsgemäßen Radarmessgeräts 600. Das Radarmessgerät 600 umfasst vorliegend einen Primärstrahler 601, einen dielektrischen Wellenleiter 602, eine Filtereinheit 603 und eine Antenneneinheit 604. Der dielektrische Wellenleiter 602 ist zwischen dem Primärstrahler 601 und der Filtereinheit 603 angeordnet. Die Wellenleitereinheit 603 ist als metallischer Hohlleiter ausgeführt. Die Antenneneinheit 604 ist als dielektrische Linse ausgeführt. Die Filtereinheit 603 filtert das Radarsignal hinsichtlich Frequenz und Mode. Die Filtereinheit 603 empfängt vorliegend Radarsignale von der dielektrischen Linse und sendet Radarsignale zur dielektrischen Linse.

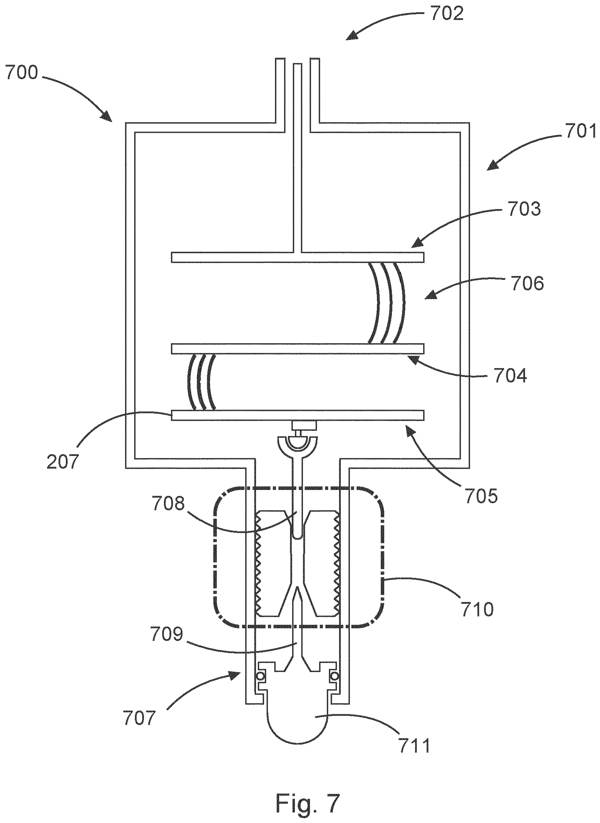

Figur 7 zeigt einen schematischen Ausschnitt eines erfindungsgemäßen Radarmessgeräts 700. Im Unterschied zu Figur 5 ist vorliegend weiter ein metallisches Gehäuse 701 des Radarmessgerät 700 dargestellt. Weiterhin weist das Radarmessgerät 700 eine Schnittstelle 702 für Energieversorgung und Datenaustausch auf, beispielsweise eine M12 Schnittstelle. Das Radarmessgerät 600 weist vorliegend eine Vielzahl an Trägerplatten 703, 704 und 705 auf, die für die Energieversorgung, die Steuerung und die Hochfrequenzschaltung zur Erzeugung und Verarbeitung von Radarsignalen genutzt werden. Diese sind über Steckverbinder 706 miteinander elektrisch verbunden. Das Radarmessgerät 700 weist im unteren Bereich des Gehäuses 701 einen metallischen Prozessanschluss 707 auf. Im Prozessanschluss 707 sind vorliegend die dielektrischen Wellenleiter 708 und 709 angeordnet sowie die Filtereinheit 710 und die Antenneneinheit 711. Die Antenneneinheit 711 ist vorliegend dichtend mit dem Prozessanschluss 707 verklebt. Die Filtereinheit 710 ist vorliegend als metallischer Hohlleiter ausgeführt. Der metallische Hohlleiter weist ein Außengewinde zur Montage im Prozessanschluss 707 auf. Der Prozessanschluss ist dazu eingerichtet mit einer korrespondierenden Öffnung eines Behälters zum Erfassen des Füllstandes verbunden zu werden.

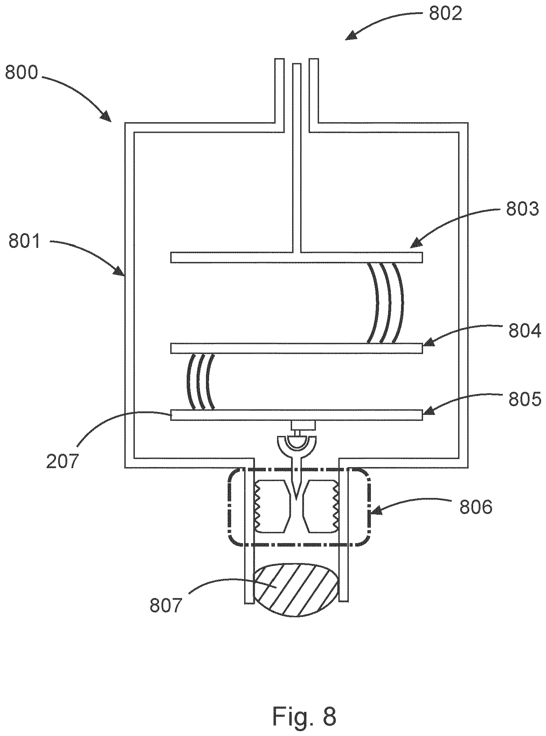

Figur 8 zeigt einen erfindungsgemäßen Ausschnitt eines Radarmessgeräts 800. Im Unterschied zu Figur 6 ist vorliegend weiter ein Gehäuse 801 dargestellt. Im Gehäuse 801 sind, wie in Figur 7 bereits dargestellt, die Schnittstelle 802 sowie die Leiterplatten 803 bis 805 angeordnet. Die Filtereinheit 806 ist vorliegend als metallischer Hohlzylinder ausgebildet und mittels eines Gewindes in dem metallischen Prozessanschluss angeordnet. Die dielektrische Linse 807 ist wiederum mit dem Prozessanschluss dichtend verklebt.

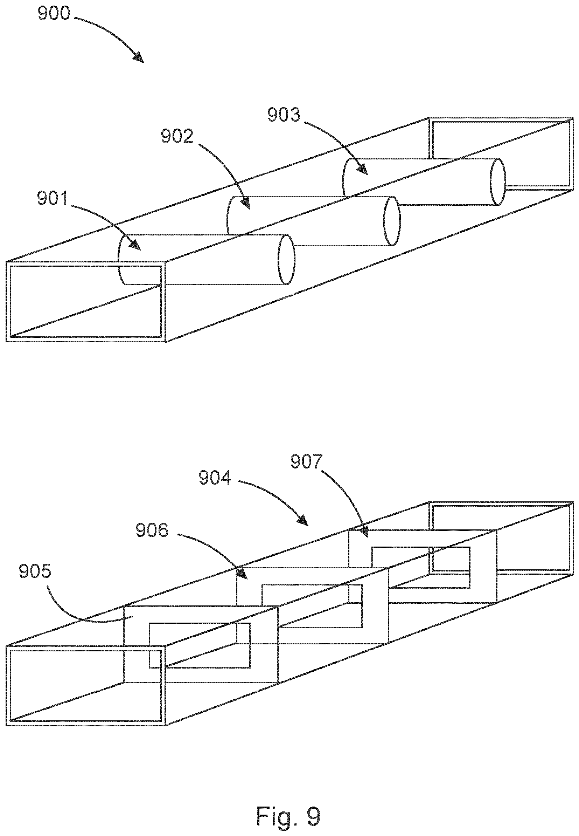

Figur 9 zeigt zwei Beispiele für Rechteckhohlleiter. Der Rechteckhohlleiter 900 weist zylindrisch geformte dielektrische Resonatorelemente 901 bis 903 auf, die im Inneren des Hohlraums angeordnet sind. Die Resonatorelemente begrenzen die Durchgangsfrequenz nach oben hin. Der Rechteckhohlleiter 904 weist die Blenden 905-907 auf, die im Inneren des Hohlraums angeordnet sind. Die Blenden begrenzen die Durchgangsfrequenz nach oben hin. Durch die Verwendung der Blenden und/oder der Resonatorelemente kann in Verbindung mit einem Rechteckhohlleiter vorliegend eine Bandpasscharakteristik für die Radarsignale im Filter erzeugt werden. Durch derartige Filter können sowohl Frequenz, Mode als auch Polarisation für die Radarsignale, die den Filter passieren, vorgegeben werden.

### Referenzliste

- 100: System
- 101, 200, 300, 400, 500, 600, 700, 800: Radarmessgerät
- 102: Antennenvorrichtung
- 103: Öffnungswinkel
- 104: Material
- 105: Behälter
- 106: Rührwerk
- 201, 304: Halbleitermaterial
- 202, 306: Resonatorelement
- 203: Koppelelement
- 204: Klebeschicht
- 205, 404, 405, 502, 602, 708, 709: dielektrischer Wellenleiter
- 206, 403, 501, 601: Primärstrahler
- 207, 303, 703, 704, 705, 803, 804, 805: Trägerplatte
- 208,305: Bonddrähte
- 401: Rundhohlleiter
- 402, 503, 603, 710, 806: Filtereinheit
- 504, 711: Antenneneinheit
- 604, 807: dielektrische Linse
- 701,801: Gehäuse
- 702, 802: Schnittstelle
- 706: Steckverbinder
- 707: Prozessanschluss
- 900, 904: Rechteckhohlleiter
- 901, 902, 903: Resonator
- 905, 906, 907: Blende

## Patentansprüche

1. Radarmessgerät zur Erfassung von Füllständen und/oder Abständen, umfassend:
einen Primärstrahler zum Senden und Empfangen von Radarsignalen;
eine Antenneneinheit zum Senden und Empfangen von Radarsignalen;
eine Filtereinheit zum Filtern der Radarsignale, wobei die Filtereinheit zwischen Primärstrahler und Antenneneinheit angeordnet ist.

2. Radarmessgerät nach Anspruch 1, wobei die Filtereinheit einen Hohlleiter umfasst.

3. Radarmessgerät nach Anspruch 1 oder 2, wobei die Filtereinheit einen Rundhohlleiter umfasst.

4. Radarmessgerät nach einem der vorherigen Ansprüche, wobei die Filtereinheit einen Rechteckhohlleiter umfasst.

5. Radarmessgerät nach einem der vorherigen Ansprüche, wobei die Filtereinheit zumindest ein Resonatorelement zur Einstellung einer Bandpasscharakteristik umfasst.

6. Radarmessgerät nach einem der vorherigen Ansprüche, wobei die Filtereinheit zumindest eine Blende zur Einstellung einer Bandpasscharakteristik umfasst.

7. Radarmessgerät nach einem der vorherigen Ansprüche, wobei die Antenneneinheit eine dielektrische Linse umfasst.

8. Radarmessgerät nach einem der vorherigen Ansprüche, wobei die Antenneneinheit eine Hornantenne umfasst.

9. Radarmessgerät nach einem der vorherigen Ansprüche, weiter umfassend zumindest ein dielektrisches Wellenleiterelement zum Führen der Radarsignale umfasst.

10. Radarmessgerät nach Anspruch 9, wobei das dielektrische Wellenleiterelement zwischen dem Primärstrahler und der Filtereinheit angeordnet ist.

11. Radarmessgerät nach Anspruch 9 oder 10, wobei das dielektrische Wellenleiterelement zwischen der Filtereinheit und der Antennenvorrichtung angeordnet ist.

12. Radarmessgerät nach einem der vorherigen Ansprüche, wobei das Radarmessgerät eingerichtet ist bei einer Frequenz oberhalb von 100 GHz zu messen.

13. System zur Erfassung von Füllständen und/oder Abständen, umfassend zumindest ein Radarmessgerät nach einem der Ansprüche 1 bis 12 sowie einen Behälter zur Speicherung eines Materials.

14. System nach Anspruch 13, wobei der Behälter ein Rührwerk umfasst.

15. System nach Anspruch 13 oder 14, wobei der Behälter eine Heizwendel umfasst.

## Geänderte Patentansprüche

### Geänderte Patentansprüche gemäss Regel 137(2) EPÜ.

1. Radarmessgerät zur Erfassung von Füllständen und/oder Abständen, umfassend:
einen Primärstrahler zum Senden und Empfangen von Radarsignalen;
eine Antenneneinheit zum Senden und Empfangen von Radarsignalen;
eine Filtereinheit zum Filtern der Radarsignale, wobei die Filtereinheit zwischen Primärstrahler und Antenneneinheit angeordnet ist;
wobei die Filtereinheit einen Rechteckhohlleiter umfasst.

2. Radarmessgerät nach Anspruch 1, wobei die Filtereinheit einen Hohlleiter umfasst.

3. Radarmessgerät nach Anspruch 1 oder 2, wobei die Filtereinheit einen Rundhohlleiter umfasst.

4. Radarmessgerät nach einem der vorherigen Ansprüche, wobei die Filtereinheit zumindest ein Resonatorelement zur Einstellung einer Bandpasscharakteristik umfasst.

5. Radarmessgerät nach einem der vorherigen Ansprüche, wobei die Filtereinheit zumindest eine Blende zur Einstellung einer Bandpasscharakteristik umfasst.

6. Radarmessgerät nach einem der vorherigen Ansprüche, wobei die Antenneneinheit eine dielektrische Linse umfasst.

7. Radarmessgerät nach einem der vorherigen Ansprüche, wobei die Antenneneinheit eine Hornantenne umfasst.

8. Radarmessgerät nach einem der vorherigen Ansprüche, weiter umfassend zumindest ein dielektrisches Wellenleiterelement zum Führen der Radarsignale umfasst.

9. Radarmessgerät nach Anspruch 8, wobei das dielektrische Wellenleiterelement zwischen dem Primärstrahler und der Filtereinheit angeordnet ist.

10. Radarmessgerät nach Anspruch 8 oder 9, wobei das dielektrische Wellenleiterelement zwischen der Filtereinheit und der Antennenvorrichtung angeordnet ist.

11. Radarmessgerät nach einem der vorherigen Ansprüche, wobei das Radarmessgerät eingerichtet ist bei einer Frequenz oberhalb von 100 GHz zu messen.

12. System zur Erfassung von Füllständen und/oder Abständen, umfassend zumindest ein Radarmessgerät nach einem der Ansprüche 1 bis 11 sowie einen Behälter zur Speicherung eines Materials.

13. System nach Anspruch 12, wobei der Behälter ein Rührwerk umfasst.

14. System nach Anspruch 12 oder 13, wobei der Behälter eine Heizwendel umfasst.
